# EUROPEAN PATENT APPLICATION

(11) **EP 1 553 120 A1**
(43) Date of publication of application: **13.07.2005**
(21) Application number: 03794160.6
(22) Date of filing: 01.09.2003
(51) Int. Cl.: C08G 63/08, C08G 18/42

(54) **LIQUID CARBOXY-CONTAINING POLYESTER OLIGOMER, WATER-COMPATIBLE POLYURETHANE RESIN, AND PROCESS FOR PRODUCING THE SAME**

(30) Priority: 03.09.2002 JP 2002258018
(71) Applicant: DAICEL CHEMICAL INDUSTRIES, Ltd., Sakai-shi, Osaka 590-0905 (JP)
(72) Inventor: ENDO, Toshio, Otake-shi, Hiroshima 739-0651 (JP); OTANI, Kisaku, Hiroshima 739-0651 (JP)
(74) Representative: Pfenning, Meinig & Partner GbR
(86) International application number: PCT/JP2003/011148
(87) International publication number: WO 2004/022627

(57) **Abstract**

A carboxy-containing polyester polyol which is obtained by polymerizing ε-caprolactone by ring-opening polymerization with a compound represented by the formula (1):

HOCH₂C (COOH) RCH₂OH

(wherein R is C₂ or higher alkyl) and which has a number-average molecular weight of 550 to 950 and is liquid at ordinary temperature. This polyol can give a water-compatible polyurethane resin which is excellent in the preservation of a working atmosphere during handling and application and has excellent drying properties after application, and which has homogeneity and excellent stability and is useful in a wide range of applications such as a binder for coating materials, printing inks, etc. and an adhesive. By the production process, a water-compatible polyurethane resin which is excellent in the preservation of a working atmosphere and drying property and is homogeneous and stable can be easily produced.

## Description

### FIELD OF THE INVENTION

The present invention relates to a water-dispersible polyurethane resin and a process for producing the same. More particularly, the present invention relates to a water-dispersible polyurethane resin and a process for producing the same, useful for applications such as coating materials, binders, adhesives and the like.

### BACKGROUND OF THE INVENTION

Water-dispersible polyurethane resins have been conventionally used as coating materials, binders, adhesives and the like, due to excellent properties thereof, such as flexibility, mechanical properties, adhesion properties and the like. Recently, with a momentum for environmental improvement of trying to restrain organic solvent released to the atmosphere, the resins have been increasingly developed and utilized.

Heretofore, there have been many attempts to converting polyurethane resins to water-dispersible ones through introducing hydrophilic groups thereinto. Among these, anionic resins having carboxylate groups introduced into polyurethane chains are actively examined, due to good water-resistance. As methods for producing such resins, are mainly used methods comprising reacting a polyisocyanate compound with a polyol and a carboxyl group-containing diol such as dimethylol propionic acid to give an NCO-group terminated urethane prepolymer, neutralizing a carboxyl group thereof with a basic substance to disperse the prepolymer into water, followed by chain-extending the prepolymer with a polyamine compound (c.f. Patent documents 1 to 3).

In these methods, however, there has been problems, in obtaining urethane prepolymers, that dimethylol propionic acid has low solubility in polyisocyanate compounds, polyols and usual low-boiling organic solvents such as acetone and methylethylketone, and that, in case of conducting reaction without any solvent or within a low-boiling organic solvent, the reaction tends to become heterogeneous and result in gelled products. Besides, in order to conduct reaction to obtain prepolymer in homogeneous system, it is compelled to use, as a solvent capable of sufficiently dissolving dimethylol propionic acid, high-boiling solvents, such as dimethyl formamide and N-methylpyrrolidone; and, since it is difficult to removed these high-boiling solvents after making the resin water-dispersible, there have been problems that high-boiling solvents remained within final aqueous resin liquors deteriorates drying property and working environment upon application of the resulting aqueous polyurethane resins.

On the other, it has reported in some publications (c.f. Patent documents 4 and 5) that a homogeneous and stable aqueous polyurethane resins can be obtained, without deteriorating drying property and working environment upon application, through reacting a polyisocyanate compound with a carboxyl group-containing polyester polyol obtainable by ring-opening polymerization of ε-caprolactone to a dimethylol alkanoic acid, and the aqueous polyurethane resins can be manufactured easily. In these specifications, however, merely an addition of caprolactone to dimethylol propionic acid was described in Example, and there were no description of an adduct of caprolactone to a dimethylol alkanoic acid represented by the formula (1) HOCH₂C(COOH)RCH₂OH (wherein R is an alkyl group of not less than C₂) according to the present invention. Besides, there was no description that carboxyl group-containing polyester polyol which is liquid at ordinary temperature and has an average molecular weight within a specific range can be produced by examining in detail the addition of caprolactone to a dimethylol alkanoic acid represented by the formula (1). (JP B 61-5485, JP B 03-48955, JP B 04-488, JP A 06-313024, and JP A 08-27243)

### DISCLOSURE OF THE INVENTION

It is an object of the present invention to provide a water-dispersible polyurethane resin capable of providing a homogeneous and stable dispersion, and to provide a process for producing easily said water-dispersible polyurethane resin, through providing a carboxyl group-containing polyester polyol liquid at ordinary temperature, without deteriorating working environment upon heating and powder-charging operations and the like in manufacturing, and without deteriorating drying property and working environment upon application

The inventors have reached the present invention, as a result of extensive investigations, finding that a water-dispersible polyurethane resin capable of providing a homogeneous and stable dispersion can be obtained by reacting a polyisocyanate compound with a polyol comprising a carboxyl group-containing polyester polyol, liquid at ordinary temperature, having a number-average molecular weight of 550 to 950 and being obtainable by ring-opening polymerization of ε-caprolactone to a compound represented by the formula (1) :

HOCH₂C (COOH) RCH₂OH

(wherein R is an alkyl group containing at least 2 carbon atoms), followed by neutralizing a carboxyl group in a molecular chain with a basic substance.

### DETAILED DESCRIPTION OF THE INVENTION

The present invention is described in detail hereinafter.

The carboxyl group-containing polyester polyol, liquid at ordinary temperature, according to this invention, is a polyester polyol having a number-average molecular weight of 550 to 950 obtainable by ring-opening polymerization of ε-caprolactone onto a compound represented by the formula (1) HOCH₂C(COOH)RCH₂OH (wherein, R is an alkyl group of not less than C₂). Dimethylol alkanoic acids, used in the invention, which are compounds represented by the formula (1), include, for example, dimethylol butanoic acids, R in the formula (1) being ethyl group, dimethylol pentanoic acids, R in the formula (1) being propyl group, and the like. Preferred are dimethylol butanoic acids, particularly 2,2-dimethylol butanoic acid.

Catalysts used in the ring-opening polymerization of ε-caprolactone to a dimethylol alkanoic acid, that is a carboxyl group-containing diol represented by the formula (1), include, for instance, organo-titanium compounds, such as tetraethyl titanate, tetrabutyl titanate and tetrapropyl titanate; organotin compounds, such as stannous octoate, dibutyltin oxide, dibutyltin dilaurate, mono-n-butyltin salts of fatty acid; and stannous halides such as stannous chloride, stannous bromide and stannous iodide, and the like.

It is preferred to use the above catalyst in an amount of 0 to 100ppm, particularly 0 to 50ppm, based on raw materials charged. In case of caprolactone addition to dimethylol butanoic acid, a ring-opening reaction of lactones can proceed even in the absence of the catalyst; while use of the catalyst in an amount of exceeding 100ppm is not preferred, causing a too rapid ring-opening reaction and resulting in poor properties, such as durability and water-resistance, of synthetic resins prepared using the resultant compounds.

Ring-opening polymerization of ε-caprolactone to a dimethylol alkanoic acid, that is a carboxyl group-containing diol represented by the formula (1), is preferably carried out at a reaction temperature in the range from 60 to 180°C, more preferably from 70 to 150°C. If the reaction temperature is less than 60°C, the ring-opening reaction of lactone is too slow to be economically accepted. On contrast, if above 180°C, undesirable gelation is occurred by an intermolecular dehydration reaction. Additionally, it is possible to attain better results in color of products and so on, through conducting synthesis during the reaction within an inert atmosphere such as nitrogen gas.

The above carboxyl group-containing polyester polyol, liquid at ordinary temperature, represented by the formula (1), has a number-average molecular weight of necessarily 550 to 950, preferably 550 to 800, and more preferably 600 to 700. Ones having a number-average molecular weight less than 550 and ones of above 950 are solid at ordinary temperature; and are not preferred with respect to conducting operations, since additional steps such as pre-heating to melt said compound are required upon using such as in charging operation into a reactor.

Content of carboxyl group in the water-dispersible polyurethane resin according to this invention, which can be controlled depending upon indicated uses, is preferably 0.4 to 5% by weight based on the solid of water-dispersible polyurethane resin. When the content of carboxyl group is below 0.4% by weight, it is difficult to make the resin water-dispersible; while such a content of carboxyl group exceeding 5% by weight results in resins of poor coating properties.

Together with the carboxyl group-containing polyester polyol having a number-average molecular weight of 550 to 950 obtainable by ring-opening polymerization of ε-caprolactone to a dimethylol alkanoic acid or a carboxyl group-containing diol represented by the formula (1) as an initiator, there may be used as a polyol component in the present invention a polyol or polyols other than the carboxyl group-containing polyester polyol. Content of carboxyl group in the solid of aqueous polyurethane resin according to the present invention can be controlled by, for example, changing the proportion of the carboxyl group-containing polyester polyol within the polyol component.

Examples of polyols other than the carboxyl group-containing polyester polyol optionally used in the present invention include ones having an average molecular weight around 400 to 5000, for example, polyether polyols, such as polytetramethylene ether glycol, polypropylene glycol and polyethylene glycol; polyester polyols, including bifunctional polyols having terminal hydroxyl groups obtainable by condensation reaction of a diol and a dicarboxylic acid such as polyethylene adipate, polyethylenebutylene adipate, polybutylene adipate, polypropylene adipate, polyhexamethylene adipate, polyneopentylene adipate and poly-3-methyl-1,5-pentylene adipate, condensation products of 1,6-hexanediol, 3-methyl-1,5-pentanediol or the like with terephthalic acid alone or a combination thereof with isophthalic acid or adipic acid, and polycaprolactone, polymethylvalerolactone, and the like; polycarbonate polyols; silicone polyols; polybutadiene polyols; polyolefinic polyols and the like. These polyols may be used alone or in combination of two or more of them.

Moreover, together with the above polyol component, there may be optionally used short-chain diol or diols, such as ethylene glycol, propylene glycol, diethylene glycol, 1,4-butanediol, neopentylene glycol, 1,6-hexanediol and 3-methyl-1,5-pentanediol. Polyisocyanate compounds in the present invention include, for example, aromatic diisocyanates, such as 4,4'-diphenylmethane diisocyanate, 2,4- or 2,6-tolylene diisocyanate, 1,5-naphthalene diisocyanate and p- or m- phenylene diisocyanate; alicyclic diisocyanates, such as isophorone diisocyanate, 4,4'-dicyclohexylmethane diisocyanate, 1,4-cyclohexylene diisocyanate and hydrogenated tolylene diisocyanate; aliphatic diisocyanates, such as hexamethylene diisocyanate; and xylylene diisocyanate, m-tetramethylxylylene diisocyanate and the like. Among these, preferred are alicyclic diisocyanates, because of being easy to prepared, stability of the resulting resin in water, and anti-yellowing properties. These polyisocyanate compounds may be used alone or in combination of two or more of them.

The present invention is based on the finding that a water-dispersible polyurethane resin capable of providing a homogeneous and stable dispersion can be obtained, in introducing a carboxyl group into a polyurethane chain or a urethane prepolymer chain, through reaction of a polyisocyanate compound with a polyester polyol, which has a number-average molecular weight in a specific range and is obtainable by ring-opening polymerization of ε-caprolactone preferably with dimethylol butanoic acid. The carboxyl group in the polyurethane chain or urethane prepolymer chain is preferably neutralized with a basic substance.

Basic substances, used for neutralizing the carboxyl group in the polyurethane chain or urethane prepolymer chain in the present invention, include, for example, tertiary amines, such as trimethylamine, triethylamine, methyldiethylamine and tripropylamine; alkanol amines, such as dimethylethanolamine, methyldiethanolamine and triethanolamine; ammonia; and hydroxides and carbonates of alkali metals such as sodium and potassium. More preferred are, for example, tertiary amines and alkanol amines. The basic substance is preferably added in a ratio of 0.5 to 1 equivalent to 1 equivalent of carboxyl group in urethane prepolymer.

Water-dispersible polyurethane resins in the present invention may be prepared by any known methods, not limited to specific ones. Preferred method is a method which comprises reacting a polyisocyanate compound with a polyol component comprising a carboxyl group-containing polyester polyol having a number-average molecular weight of 550 to 950 obtainable by ring-opening polymerization of ε-caprolactone to dimethylol butanoic acid as an initiator; neutralizing carboxyl groups in the resulting water-soluble polyurethane resin with a basic substance to disperse or dissolve the resin into water; and chain-extending the resin with a chain-extender to produce a water-dispersible polyurethane resin.

Water-dispersible polyurethane resins in this invention may be prepared by any known methods, not limited to specific ones. Preferred method is a method which comprises reacting a polyisocyanate compound with a polyol component containing carboxyl group-containing polyester polyol having a number-average molecular weight of 550 to 950 obtainable by ring-opening polymerization of ε-caprolactone to dimethylol butanoic acid as an initiator, to prepare a urethane prepolymer having terminal NCO groups; neutralizing carboxyl group to disperse or dissolve the prepolymer into water; and chain-extending the prepolymer with a chain-extender to prepare a water-dispersible polyurethane resin.

Preferable chain-extenders, optionally used for chain-extention of urethane prepolymers having terminal NCO groups in the present invention, are polyamine compounds, for example, diamines, such as ethylenediamine, 1,2-propanediamine, tetramethylenediamine, hexamethylene diamine, 1,4-cyclohexylenediamine, isophorondiamine, 4,4'-dicyclohexylmethanediamine, m-xylylenediamine, phenylenediamine; polyethylene polyamines, such as diethylenetriamine, triethylenetetramine and tetraethylenepentamine; hydrazine; piperazine; and dihydrazide compounds of hydrazine with adipic acid or phthalic acid and the like. There may also be used short-chain diol or diols as mentioned above. These may be used alone or in combination of two or more of them. In combination with the polyamine compound, there may be used monoethanolamine or diethanolamine to introduce hydroxyl groups at the ends of the polyurethane, or there may be used aminoethylaminoethanol to introduce hydroxyl groups on the main chain.

In the present invention, urethane prepolymer having terminal NCO groups may be reacted without any solvent and used as such. Alternatively, prepolymer may be diluted with a small amount of a low-boiling organic solvent or may be prepared through reaction within a solution beforehand containing a small amount of low-boiling organic solvent, to reduce viscosity thereof, in order to facilitate afterward emulsification of the prepolymer with water into oil-in-water emulsions. In this case, it is generally preferred to react the polyisocyanate compound with the polyol component in an equivalent ratio of NCO/OH=1.1/1 to 6/1.

Low-boiling organic solvents, used in the above reaction of urethane prepolymers, are preferably removed after aquefication of the resin, and thus preferably have a boiling point of not more than 100°C due to the ease of removal, including, for instance, acetone, methylethylketone, tetrahydrofuran and the like. More preferred are acetone and methylethylketone, particularly acetone.

It is preferred to conduct reaction of urethane prepolymer under nitrogen stream without any catalyst. When using a catalyst, there may be used, for example, organometallic catalysts, such as dibutyltin dilaurate, dibutyltin dioctoate and dibutyltin diacetate; and tertiary amine catalysts, such as triethylenediamine. Reaction temperature is preferably within the range from 20 to 120°C. Reaction time, which can be varied depending upon the reaction temperature and so on of each stage of reaction and not defined categorically, is preferably around 1 to 20 hours.

In case of using an organic solvent in the reaction of the water-dispersible polyurethane resin according to the present invention, there can be taken any methods to remove it, for example, a method of removing a solvent by feeding air, nitrogen gas or the like on or into an obtained reaction solution, at a temperature not more than the boiling point of water, or at 30 to 100°C; a method of removing a solvent under reduced pressure from the reaction vessel; and a method of using a thin film evaporator. Although another object of the present invention is to provide a water-dispersible polyurethane of almost organic solvent-free, if an application allows use of a small amount of organic solvent, an organic solvent may be used in the preparation of the water-dispersible polyurethane resin and allowed to remain in the reaction product as it is.

Water-dispersible polyurethane resins finally obtained according to the present invention usually have a solid content of 10 to 70% by weight, and polyurethane particles dispersed in water preferably have an average particle size of not more than 5µm. Appearance of water-dispersible polyurethane resin of the present invention can be varied depending upon size of dispersed particles. When an average particle size is smaller, the resin is in a fluorescent liquid state, and when an average particle size is larger, the resin is white emulsion. In any case, it maintains its nature in stable state over time. A solids content and a viscosity can be adjusted according to an application by controlling a particle size of dispersed polyurethane. A polyurethane resin having less hydrophilic groups therein tends to provide larger particle size when dispersed and those having more hydrophilic groups tend to provide smaller particle size. Water-dispersible polyurethane resins of this invention have a number-average molecular weight of preferably 6,000 to 500,000, more preferably 7, 000 to 300, 000, and further more preferably 8, 000 to 150,000.

"A number-average molecular weight" as used herein refers a value obtained by measuring with GPC at 1% by weight in tetrahydrofuran and converting in the basis of polystyrene conversion calculation. Water-dispersible polyurethane resins of the invention are suitable for various applications, such as coating materials, binders, adhesives and the like, and may be used as such in the form of one-component, or may be used in the form of two-component, optionally mixed with a water-dispersible blocked isocyanate curative, an unblocked NCO group-containing water-dispersible isocyanate curative, a melaminic curative, or a polyaziridine compound or the like as a cross-linker. In this case, the water-dispersible polyurethane resin may be optionally blended with various additives, such as antioxidants, UV stabilizers, colorants, antifoaming agents, flow control agents, water repellants and fillers.

The present invention is further described in detail by the following Examples below, but the present invention should not be restricted to these the Examples without departing from the scope of the invention. In Examples, parts and % mean parts by weight and % by weight, respectively.

### EXAMPLES

### Example 1

In a reaction vessel, 148 parts of dimethylol butanoic acid, 452 parts of ε-caprolactone and stannous octoate as a catalyst in a catalyst concentration of 5ppm were charged, and heated under stirring within a nitrogen stream to dissolve them uniformly, followed by reacting them for 4 hours at 90°C to give a carboxyl group-containing polyester polyol having a number-average molecular weight of 600. It is designated as Polyol A.

### Example 2

In a reaction vessel, 148 parts of dimethylol butanoic acid, 552 parts of ε-caprolactone and stannous octoate as a catalyst in a catalyst concentration of 5ppm were charged, and reacted similarly as in Example 1 to give a carboxyl group-containing polyester polyol having a number-average molecular weight of 700. It is designated as Polyol B.

### Example 3

In a reaction vessel, 148 parts of dimethylol butanoic acid, 652 parts of ε-caprolactone and stannous octoate as a catalyst in a catalyst concentration of 5ppm were charged, and reacted similarly as in Example 1 to give a carboxyl group-containing polyester polyol having a number-average molecular weight of 800. It is designated as Polyol C.

### Example 4

In a reaction vessel, 148 parts of dimethylol butanoic acid, 752 parts of ε-caprolactone and stannous octoate as a catalyst in a catalyst concentration of 5ppm were charged, and reacted similarly as in Example 1 to give a carboxyl group-containing polyester polyol having a number-average molecular weight of 900. It is designated as Polyol D.

### Comparative Example 1

In a reaction vessel, 148 parts of dimethylol butanoic acid, 352 parts of ε-caprolactone and stannous octoate as a catalyst in a catalyst concentration of 5ppm were charged, and reacted similarly as in Example 1 to give a carboxyl group-containing polyester polyol having a number-average molecular weight of 500. It is designated as Polyol E.

### Comparative Example 2

In a reaction vessel, 148 parts of dimethylol butanoic acid, 852 parts of ε-caprolactone and stannous octoate as a catalyst in catalyst concentration of 5ppm were charged, and reacted similarly as in Example 1 to give a carboxyl group-containing polyester polyol having a number-average molecular weight of 1000. It is designated as Polyol F.

### Comparative Example 3

In a reaction vessel, 134 parts of dimethylol propionic acid, 366 parts of ε-caprolactone and stannous octoate as a catalyst in a catalyst concentration of 5ppm were charged, and reacted similarly as in Example 1 to give a carboxyl group-containing polyester polyol having a number-average molecular weight of 500. It is designated as Polyol G.

### Comparative Example 4

In a reaction vessel, 134 parts of dimethylol propionic acid, 466 parts of ε-caprolactone and stannous octoate as a catalyst in a catalyst concentration of 5ppm were charged, and reacted similarly as in Example 1 to give a carboxyl group-containing polyester polyol having a number-average molecular weight of 600. It is designated as Polyol H.

### Comparative Example 5

In a reaction vessel, 134 parts of dimethylol propionic acid, 566 parts of ε-caprolactone and stannous octoate as a catalyst in a catalyst concentration of 5ppm were charged, and reacted similarly as in Example 1 to give a carboxyl group-containing polyester polyol having a number-average molecular weight of 700. It is designated as Polyol I.

### Comparative Example 6

In a reaction vessel, 134 parts of dimethylol propionic acid, 666 parts of ε-caprolactone and stannous octoate as a catalyst in catalyst concentration of 5ppm were charged, and reacted similarly as in Example 1 to give a carboxyl group-containing polyester polyol having a number-average molecular weight of 800. It is designated as Polyol J.

### Comparative Example 7

In a reaction vessel, 134 parts of dimethylol propionic acid, 766 parts of ε-caprolactone and stannous octoate as a catalyst in a catalyst concentration of 5ppm were charged, and reacted similarly as in Example 1 to give a carboxyl group-containing polyester polyol having a number-average molecular weight of 900. It is designated as Polyol K.

### Comparative Example 8

In a reaction vessel, 134 parts of dimethylol propionic acid, 866 parts of ε-caprolactone and stannous octoate as a catalyst in a catalyst concentration of 5ppm were charged, and reacted similarly as in Example 1 to give a carboxyl group-containing polyester polyol having a number-average molecular weight of 1000. It is designated as Polyol L.

Observation results at 25°C of Polyols A to L obtained by Examples1 to 4 and Comparative Examples1 to 8 are shown in Table 1.

**Table 1**

| | Example | | | | Comparative Example | | | | | | | |
|---|---|---|---|---|---|---|---|---|---|---|---|---|
| | 1 | 2 | 3 | 4 | 1 | 2 | 3 | 4 | 5 | 6 | 7 | 8 |
| Polyol | A | B | C | D | E | F | G | H | I | J | K | L |
| State at 25°C | Liquid | Liquid | Liquid | Liquid | Solid | Solid | Solid | Solid | Solid | Solid | Solid | Solid |
| DMBA or DMPA | DMBA | DMBA | DMBA | DMBA | DMBA | DMBA | DMPA | DMPA | DMPA | DMPA | DMPA | DMPA |
| Molecular weight | 600 | 700 | 800 | 900 | 500 | 1000 | 500 | 600 | 700 | 800 | 900 | 1000 |
| DMBA: dimethylol butanoic acid | | | | | | | | | | | | |
| DMPA: dimethylol propionic acid | | | | | | | | | | | | |

### Example 5

In a reaction vessel, 83.5 parts of isophorone diisocyanate, 111.6 parts of polytetramethylene ether glycol having a number-average molecular weight of 1000 and 54.9 parts of Polyol A obtained in Example 1 were charged, and reacted under stirring for 5 hours at 80°C within nitrogen stream to give a homogeneous clear urethane prepolymer having terminal NCO groups. Then, the prepolymer was cooled down to a temperature of 50°C and neutralized with 9.24 parts of triethylamine. To this, was added 383.4 parts of demineralized water gradually to result an oil-in-water urethane prepolymer dispersion, followed by adding thereto 33.22 parts of isophorone diamine and 299.0 parts of demineralized water at 10°C to conduct a chain-extension of the prepolymer to obtain a water-dispersible polyurethane resin. Upon the following tests, the resin had a solid content of 30%, a viscosity of 150mPa·s/25°C and an average particle size of 5µm. The resin was coated onto a glass plate at gap of 250µm, and dried for 2 hours at 80°C to give a homogeneous clear and soft film of about 70µm in thickness. The resulting film showed good physical properties of tensile strength of 48MPa and elongation of 600%, upon tensile test, after allowing to stand for 1 day at 23°C and 60% RH, according to the following test method under the same environment. The resin had a number-average molecular weight of 31,000 on the basis of polystyrene conversion calculation, upon dissolving the resultant film in tetrahydrofuran to 1% concentration and measuring molecular weight with GPC (gel-permeation chromatography).

### Example 6

In a reaction vessel, 80.6 parts of isophorone diisocyanate, 107.6 parts of polytetramethylene ether glycol having a number-average molecular weight of 1000 and 61.8 parts of Polyol B obtained in Example 2 were charged, and reacted under stirring for 5 hours at80°C within nitrogen stream to give a homogeneous clear urethane prepolymer having terminal NCO groups. Then, the prepolymer was cooled down to a temperature of 50°C and neutralized with 8.91 parts of triethylamine. To this, was added 382.6 parts of demineralized water gradually to result an oil-in-water urethane prepolymer dispersion, followed by adding thereto 33.22 parts of isophorone diamine and 299.0 parts of demineralized water at 10°C to conduct a chain-extension of the prepolymer to obtain a water-dispersible polyurethane resin. Upon the following tests, the resin had a solid content of 30%, a viscosity of 140mPa·s/25°C and an average particle size of 5µm. Then, a homogeneous clear film was obtained similarly as in Example 5, and the resulting film showed good physical properties of tensile strength of 44MPa and elongation of 600%, upon tensile test according to the following test method. The resin had a number-average molecular weight of 43,000.

### Comparative Example 9

In a reaction vessel, 86.7 parts of isophorone diisocyanate, 115.8 parts of polytetramethylene ether glycol having a number-average molecular weight of 1000 and 47.5 parts of Polyol E obtained in Comparative Example 1, liquefied by pre-heating within an oven for 1 day at 60°C, were charged, and reacted under stirring for 5 hours at 80°C within nitrogen stream to give a homogeneous clear urethane prepolymer having terminal NCO groups. Then, the prepolymer was cooled down to a temperature of 50°C and neutralized with 9.59 parts of triethylamine. To this, was added 384.2 parts of demineralized water gradually to result an oil-in-water urethane prepolymer dispersion, followed by adding thereto 33.22 parts of isophorone diamine and 299.0 parts of demineralized water at 10°C to conduct a chain-extension of the prepolymer to obtain a water-dispersible polyurethane resin. Upon the following tests, the resin had a solid content of 30%, a viscosity of 180mPa·s/25°C and an average particle size of 5µm. Then, a homogeneous clear film was obtained similarly as in Example 5, and the resulting film showed good physical properties of tensile strength of 52MPa and elongation of 580%, upon tensile test according to the following test method. The resin had a number-average molecular weight of 43,000.
The measurement methods of physical properties in Examples are as follows.

### Test methods

### (1) Viscosity

Viscosity (mPa·s) at 25°C was measured with a rotary viscometer of EM-type, manufactured by Tokyo Keiki Co. Ltd., with respect to aqueous solutions of water-dispersible polyurethane resins, after chain-extention, obtained in Examples 5 and 6 and Comparative Example 9.

### (2) Average particle size

Average particle size (µm) was measured with a viscosity profile measurement apparatus manufactured by HORIBA Ltd., with respect to aqueous solutions of water-dispersible polyurethane resins, after chain-extention, obtained in Examples 5 and 6 and Comparative Example 9.
particle size(µm) with a viscosity profile measurement apparatus, manufactured by HORIBA Ltd., .

### (3) Physical properties

With respect to films obtained in Examples 5 and 6 and Comparative Example 9, each film was die-cut into 1OX120mm with a die cutter, and tensile strength (MPa) and elongation(%) were measured according to JIS K 6301 at a tensile rate of 500 mm/min with a Tensilon UTM-III/-100 model, manufactured by Toyo Baldwin Co. Ltd..

### INDUSTRIAL APPLICABILITY

Water-dispersible polyurethane resins obtained according to the present invention provide excellent working environment and drying characteristics during handling and application as well as excellent homogeneity and stability, and are useful for a wide range of applications, for example, coatings, binders, such as ones for printing inks, adhesives and the like. Further, according to the production process of the present invention, it is possible to produce easily a water-dispersible polyurethane resin providing excellent working environment and drying characteristics as well as excellent homogeneity and stability.

## Claims

1. A carboxyl group-containing polyester polyol liquid at ordinary temperature, having a number-average molecular weight of 550 to 950 and being obtainable by ring-opening polymerization of ε-caprolactone to a compound represented by the formula:
HOCH₂C (COOH) RCH₂OH (1)
wherein R is an alkyl group containing at least 2 carbon atoms.

2. A carboxyl group-containing polyester polyol liquid at ordinary temperature, according to claim 1, wherein the compound represented by the formula (1) is dimethylol butanoic acid.

3. A water-dispersible polyurethane resin, which is obtainable by reacting a polyisocyanate compound with a polyol component comprising the carboxyl group-containing polyester polyol liquid at ordinary temperature according to claim 1 or 2, and contains a carboxyl group neutralized with a basic substance within the molecular chain.

4. A water-dispersible polyurethane resin according to claim 3, which contains the carboxyl group in an amount of 0.4 to 5% by weight in the solid content of the water-dispersible polyurethane resin.

5. A water-dispersible polyurethane resin according to claim 3 or 4, wherein the water-dispersible polyurethane resin has a number-average molecular weight of 6,000 to 500, 000.

6. A process for producing a water-dispersible polyurethane resin, which comprises neutralizing, with a basic substance, carboxyl group or groups of a water-dispersible polyurethane resin obtainable by reacting a polyisocyanate compound with the carboxyl group-containing polyester polyol liquid at ordinary temperature according to claim 1 or 2, to disperse or dissolve the resin into water; and chain-extending the polyurethane resin with a chain-extender.

7. A process for producing a water-dispersible polyurethane resin, which comprises reacting a polyisocyanate compound with a polyol component comprising the carboxyl group-containing polyester polyol liquid at ordinary temperature according to claim 1 or 2 to prepare a urethane prepolymer having terminal NCO groups; neutralizing, with a basic substance, carboxyl group or groups of the prepolymer to disperse or dissolve the prepolymer into water; and chain-extending the prepolymer with a chain-extender.

8. A water-dispersible polyurethane resin obtainable by the production process according to claim 6 or 7.
